# EUROPEAN PATENT SPECIFICATION

(11) **EP 3 230 574 B1**
(45) Date of publication and mention of the grant of the patent: **28.11.2018**
(21) Application number: 14821231.9
(22) Date of filing: 12.12.2014
(51) Int. Cl.: F02G 5/04, F02B 29/04

(54) **SYSTEM FOR RECOVERING HEAT FROM A CHP PLANT**
SYSTEM ZUR RÜCKGEWINNUNG VON WÄRME AUS EINER KWK-ANLAGE
SYSTÈME POUR RÉCUPÉRER DE LA CHALEUR D'UNE CENTRALE MIXTE ÉLECTROCALOGÈNE

(43) Date of publication of application: 18.10.2017
(73) Proprietor: Wärtsilä Finland Oy, 65100 Vaasa (FI)
(72) Inventor: ANDERSSON, Jan, FI-65100 Vaasa (FI); FÄLTÉN, Stefan, FI-65100 Vaasa (FI); KNOOKALA, Peter, FI-65100 Vaasa (FI); LAUNONEN, Frans, FI-65100 Vaasa (FI); JAKOBSSON, Mats, FI-65100 Vaasa (FI)
(74) Representative: Berggren Oy, Helsinki & Oulu
(86) International application number: PCT/FI2014/050994
(87) International publication number: WO 2016/092147

(56) References cited:
- EP-A1- 2 527 244
- WO-A1-2009/051140

## Description

### TECHNICAL FIELD

The invention concerns in general the technology of combined heat and power plants comprising internal combustion piston engines, such as large diesel engines. In particular the invention concerns the way in which the heat recovery is arranged due to changes in operating conditions.

### BACKGROUND OF THE INVENTION

A combined heat and power plant (CHP-plant) comprises basically an internal combustion engine which runs on gas or liquid fuel and thus converts chemical energy in to both electric and thermal energy. As the amount of electric energy available from an internal combustion engine is limited for being around 30% to 50% depending on the engine, the rest of the energy released from the fuel is in the form of thermal energy i.e. heat. Thus the better the heat recovery and utilization is from the CHP-plant the better is the overall efficiency.

A patent document DE2726971 A1 discloses that a district heating power station has a gas turbine, the exhaust gases of which flow through a waste heat boiler and an aftercooler in succession before being led to the chimney as flue gases. By means of an intermediate circuit the exhaust gas heat is transmitted in a heat exchanger to the energy transfer medium of a district heating network, this energy transfer medium, with the aid of a series connection, first flowing through the aftercooler and then through the heat exchanger. The utilization factor E of the district heating power station can thereby be successfully improved. EP2527244 A1 discloses a combined heat and power plant for a ship.

### SUMMARY OF THE INVENTION

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

The objective of the present invention is to improve the efficiency of a combined heat and power plant.

The present invention is characterized by what is said in the characterizing part of the patent claim 1. Thus the present invention concerns a system for recovering heat from a combined heat and power plant comprising an internal combustion engine and a heating circuit for heating fluid to circulate, said system comprising:
- an exhaust heat exchanger is provided for recovering heat from exhaust gases of the engine,
- a cooling liquid heat exchanger is provided for recovering heat from a cooling liquid circuit of the engine,
- a charge air cooling heat exchanger is provided for recovering heat from charge air,
- a lubrication oil heat exchanger is provided for recovering heat from a lubrication oil circuit of the engine,
- a district heating heat exchanger for providing heat to a district heating consumer network,
- the cooling liquid heat exchanger and the charge air cooling heat exchanger are connected in series,
- there are provided two 4-way valves and an interconnecting channel between the 4-way valves to configure the order of said cooling liquid heat exchanger and the charge air cooling heat exchanger in respect to each other while maintaining the direction of the flow of the heating fluid through said cooling liquid heat exchanger and charge air cooling heat exchanger. Thus the flow circulates always to the correct designed direction despite of the order of the system components - the charge air cooling heat exchanger and the cooling liquid heat exchanger.

The present system enables an improved efficiency due to the better control of the different heat exchangers of the CHP-plant. This better control enables high temperature differences (i.e. change of temperature of a medium flowing through the heat exchanger, both in a primary circuit and in a secondary circuit of the heat exchanger) over the heat exchangers and thus maximal heat recovery from various heat sources of the CHP-plant to the heating fluid running through the heat exchangers and then the collected heat distributed further to the district heating consumer network. Thus the present invention achieves the objective of improving the efficiency of a CHP-plant. Furthermore the present invention may reduce a need to use of a separate exhaust gas economizer/aftercooler in certain applications. Also the present invention enables the heating circuit to be configured in an efficient way depending on the temperatures of the various heat sources and heat consumption of a district heating consumer network connected to the district heating heat exchanger. In this context a threshold temperature for switching the order of the charge air cooling heat exchanger and the cooling liquid heat exchanger or a mode selected due to a low district heating consumer network input/output temperature or a high district heating consumer network input/output temperature could be for example within a range of 60 to 65 °C measured from the heating fluid at a point after the lubrication oil heat exchanger or district heating heat exchanger.

Low district heating consumer network temperatures can also be considered to be as follows:
Return line temperature in the range of 35 - 50 °C
Supply line temperature in the range of 75 - 95 °C
High district heating consumer network temperatures can be considered to be as follows:
Return line temperature in the range of 70 - 90 °C
Supply line temperature in the range of 120 - 140 °C.
These temperatures can also be used as indicators or decisive factors for mode switch.

As discussed in the above the "switch" selection can be done based on a threshold temperature of the heating fluid temperature after the lubrication heat exchanger or district heating heat exchanger. The threshold temperature of 60 - 65 °C would ensure sufficient cooling of the engine jacket i.e. the cooling liquid heat exchanger in both "modes". Furthermore, it is also possible to switch between "summer" and "winter" operation mode solely based on a date, possible determined by local average temperature, so that is also a viable option.

According to an embodiment the first 4-way valve is in the heating circuit at a location downstream of the lubrication oil heat exchanger and the district heating heat exchanger, but upstream of the cooling liquid heat exchanger and charge air cooling heat exchanger. The second 4-way valve is in the heating circuit at a location downstream of the cooling liquid heat exchanger or the charge air cooling heat exchanger, but upstream of the exhaust heat exchanger. The purpose of these features is to ensure that the circuit configuration can be altered in an efficient manner while the engine running parameters are as efficient as possible. The temperatures of returning lubrication oil and cooling liquid to the engine need to be maintained within a certain range and therefore it is preferred to take all excess heat away, but not more so that the returning lubrication oil or cooling liquid temperature is at the lower limit of the operational range for the engine. As this is partly dependent on the outside temperature and district heating consumer network input/output temperatures, the present system gives more tools to obtain the high efficiency of the system.

The previously explained flow configuration change can be done by a dual 4-way valve installation. Those two 4-way valves are connected together via an interconnecting channel. This interconnecting channel may be very short in length or it may be quite long depending on the overall layout of the system. Also the set-up of for operating the 4-way valves can be carried out in different ways. According to an embodiment, the two 4-way valves are mutually synchronized so that the action of both valves is simultaneous. This makes it possible to change the configuration during running of the system. Naturally when the system is shut down also non-synchronized valves are possible to be operated. The basic alternatives for synchronized action are that the two 4-way valves are mechanically synchronized or that the two 4-way valves are electronically synchronized.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings

### BRIEF DESCRIPTION OF THE DRAWINGS

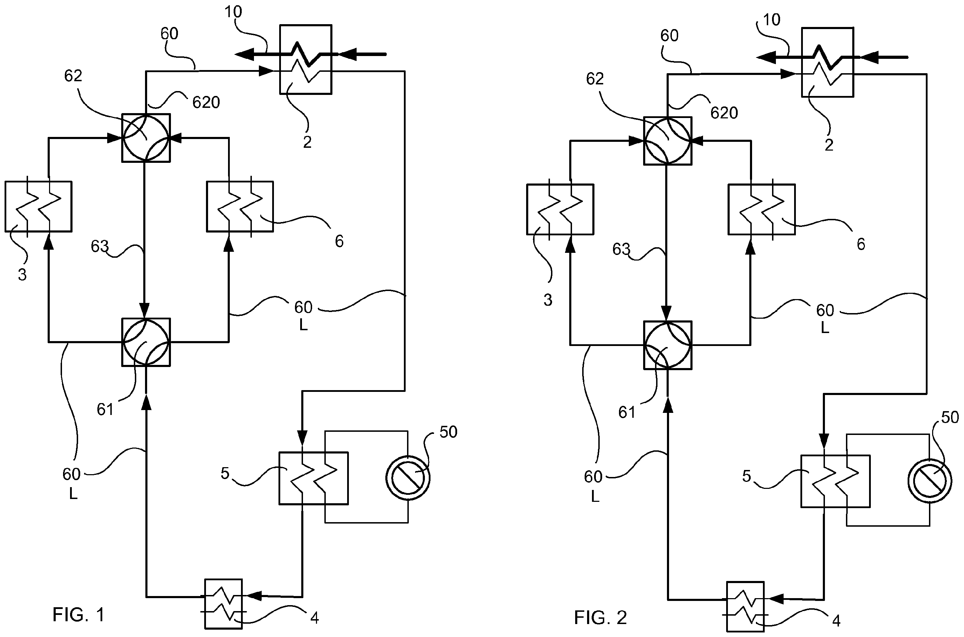

Fig. 1 illustrates the present system set in a first mode, fig. 2 illustrates the present system set in a second mode.

### DETAILED DESCRIPTION OF EMBODIMENTS OF THE INVENTION

In fig 1 it is presented a system for recovering heat from a combined heat and power plant comprising an internal combustion engine 1 and a heating circuit 60 for heating fluid L to circulate, said system comprising:
- an exhaust heat exchanger 2 is provided for recovering heat from exhaust gases 10 of the engine 1,
- a cooling liquid heat exchanger 3 is provided for recovering heat from a cooling liquid circuit 30 of the engine 1,
- a charge air cooling heat exchanger 6 is provided for recovering heat from charge air 60,
- a lubrication oil heat exchanger 4 is provided for recovering heat from a lubrication oil circuit 40 of the engine 1,
- a district heating heat exchanger 5 for providing heat to a district heating consumer network 50,
- the cooling liquid heat exchanger 3 and the charge air cooling heat exchanger 4 are connected in series,
- there are provided two 4-way valves 61, 62 and an interconnecting channel 63 between the 4-way valves 61, 62 to configure the order of said cooling liquid heat exchanger 3 and the charge air cooling heat exchanger 4 in respect to each other while maintaining the direction of the flow of the heating fluid L through said cooling liquid heat exchanger 3 and charge air cooling heat exchanger 6. The flow direction and set up presented in fig. 1 is called here as a first mode wherein the flow is directed first to the charge air cooling heat exchanger 6. To keep the figures clear and simple, the figures are heavily simplified and schematic.

According to an embodiment also shown in figures 1 and 2, the first 4-way valve 61 is in the heating circuit 60 at a location downstream of the lubrication oil heat exchanger 4 and the district heating heat exchanger 5, but upstream of the cooling liquid heat exchanger 3 and charge air cooling heat exchanger. The second 4-way valve 62 is in the heating circuit 60 at a location downstream of the cooling liquid heat exchanger 3 or the charge air cooling heat exchanger 6, but upstream of the exhaust heat exchanger 2. Preferably the valve type for both 4-way valves 61, 62 is a butterfly valve, which allows the change of the flow to be performed during running, so that there is always an open passage through the valve, even during the turning movement from first position to the second position. This makes it easy to change the mode according to present running conditions. The previously explained synchronizing movement also supports this action.

As shown in fig. 1, the first mode is set in when the two 4-way valves 61, 62 are turned to its first position, the heating circuit 60 is configured so that the heating circuit 60 runs in the downstream direction first from the first 4-way valve 61 to the charge air cooling heat exchanger 6, then to the second 4-way valve 62, then returning via the interconnecting channel 63 back to the first 4-way valve 61 and then to the cooling liquid heat exchanger 3 and then to the second 4-way valve 62 and then to an outlet channel 620. This set up or configuration is optimal for situations where the district heating temperature is not that high, for example on summertime. The applicant has performed a detailed calculation which has shown that on first mode and with low district heating temperatures the efficiency improvement is about 1 %.

In fig. 2 it is shown the exactly same system as in fig. 1 but the two 4-way valves 61, 62 are turned to the second mode. The second mode is on when the two 4-way valves 61, 62 are turned to its second position, the heating circuit 60 is configured so that the heating circuit 60 runs in the downstream direction first from the first 4-way valve 61 to the cooling liquid heat exchanger 3, then to the second 4-way valve 62, then returning via the interconnecting channel 63 back to the first 4-way valve 61 and then to the charge air cooling heat exchanger 6 and then to the second 4-way valve 62 and then to an outlet channel 620. This set up or configuration is optimal for situations where the district heating temperature is high, for example on wintertime. The applicant has performed a detailed calculation which has shown that on second mode and with high district heating temperatures the efficiency improvement is about 4 to 6 %.

The system of fig. 1 and fig. 2 enables a very high temperature difference over the heat exchangers 2, 3, 4, 6 and 6. This very high temperature difference is achieved so that the heating liquid flowing into the heat exchanger is as cool as possible and then it can receive the maximum amount of heat from the other circuit or medium i.e. from the exhaust gas, engine cooling liquid, charge air or lubrication oil.

### REFERENCE SIGNS USED IN FIGURES

- 10: engine exhaust gas
- 2: exhaust heat exchanger
- 3: cooling liquid heat exchanger
- 4: lubrication oil heat exchanger
- 5: district heating heat exchanger
- 50: district heating consumer network
- 6: charge air cooling heat exchanger
- 60: heating circuit
- L: heating fluid
- 61: (first) 4-way valve
- 62: (second) 4-way valve
- 620: outlet channel
- 63: interconnecting channel

## Claims

1. A system for recovering heat from a combined heat and power plant comprising an internal combustion engine and a heating circuit (60) for heating fluid (L) to circulate, said system comprising:
- an exhaust heat exchanger (2) is provided for recovering heat from exhaust gases (10) of the engine,
- a cooling liquid heat exchanger (3) is provided for recovering heat from a cooling liquid circuit (30) of the engine,
- a charge air cooling heat exchanger (6) is provided for recovering heat from charge air,
- a district heating heat exchanger (5) for providing heat to a district heating consumer network (50),
- the cooling liquid heat exchanger (3) and the charge air cooling heat exchanger (6) are connected in series, **characterized in that** - a lubrication oil heat exchanger (4) is provided for recovering heat from a lubrication oil circuit (40) of the engine,
- there are provided two 4-way valves (61, 62) and an interconnecting channel (63) between the 4-way valves (61, 62) to configure the order of said cooling liquid heat exchanger (3) and the charge air cooling heat exchanger (6) in respect to each other while maintaining the direction of the flow of the heating fluid (L) through said cooling liquid heat exchanger (3) and charge air cooling heat exchanger (6).

2. The system of claim 1, **characterized in that** the two 4-way valves (61, 62) are mutually synchronized so that the action of both valves (61, 62) is simultaneous.

3. The system of claim 2, **characterized in that** the two 4-way valves (61, 62) are mechanically synchronized.

4. The system of claim 2, **characterized in that** the two 4-way valves (61, 62) are electronically synchronized.

5. The system of claim 1, **characterized in that** the first 4-way valve (61) is in the heating circuit (60) at a location downstream of the lubrication oil heat exchanger (4) and the district heating heat exchanger (5), but upstream of the cooling liquid heat exchanger (3) and charge air cooling heat exchanger.

6. The system of claim 1, **characterized in that** the second 4-way valve (62) is in the heating circuit (60) at a location downstream of the cooling liquid heat exchanger (3) or the charge air cooling heat exchanger (6), but upstream of the exhaust heat exchanger (2).

7. The system of claim 1, **characterized in that** that when the two 4-way valves (61, 62) are turned to its first position, the heating circuit (60) is configured so that the heating circuit (60) runs in the downstream direction first from the first 4-way valve (61) to the charge air cooling heat exchanger (6), then to the second 4-way valve (62), then returning via the interconnecting channel (63) back to the first 4-way valve (61) and then to the cooling liquid heat exchanger (3) and then to the second 4-way valve (62) and then to an outlet channel (620).

8. The system of claim 1, **characterized in that** that when the two 4-way valves (61, 62) are turned to its second position, the heating circuit (60) is configured so that the heating circuit (60) runs in the downstream direction first from the first 4-way valve (61) to the cooling liquid heat exchanger (3), then to the second 4-way valve (62), then returning via the interconnecting channel (63) back to the first 4-way valve (61) and then to the charge air cooling heat exchanger (6) and then to the second 4-way valve (62) and then to an outlet channel (620).

9. The system of claim 7, **characterized in that** that the first position of the two 4-way valves i.e. a first mode is selected when the district heating consumer network temperature is low.

10. The system of claim 7, **characterized in that** that the second position of the two 4-way valves i.e. a second mode is selected when the district heating consumer network temperature is high.

## Patentansprüche

1. System zum Rückgewinnen von Wärme aus einem Blockheizkraftwerk, das eine Verbrennungskraftmaschine und einen Heizkreislauf (60) zum Erhitzen von zu zirkulierendem Fluid (L) umfasst, das System umfassend:
- ein Abgaswärmetauscher (2) ist zum Rückgewinnen von Wärme aus Abgasen (10) der Kraftmaschine vorgesehen,
- ein Kühlflüssigkeitswärmetauscher (3) ist zum Rückgewinnen von Wärme aus einem Kühlflüssigkeitskreislauf (30) der Kraftmaschine vorgesehen,
- ein Ladeluftkühlungswärmetauscher (6) ist zum Rückgewinnen von Wärme aus Ladeluft vorgesehen,
- einen Fernwärmetauscher (5) zum Bereitstellen von Wärme an ein Fernwärmeverbrauchernetzwerk (50),
- wobei der Kühlflüssigkeitswärmetauscher (3) und der Ladeluftkühlungswärmetauscher (6) in Reihe verbunden sind,
**dadurch gekennzeichnet, dass**
- ein Schmierölwärmetauscher (4) zum Rückgewinnen von Wärme aus einem Schmierölkreislauf (40) der Kraftmaschine vorgesehen ist,
- zwei 4-Wege-Ventile (61, 62) und ein Verbindungskanal (63) zwischen den 4-Wege-Ventilen (61, 62) vorhanden sind, um die Reihenfolge des Kühlflüssigkeitswärmetauschers (3) und des Ladeluftkühlungswärmetauschers (6) in Bezug zueinander einzustellen, während die Strömungsrichtung des Heizfluids (L) durch den Kühlflüssigkeitswärmetauscher (3) und den Ladeluftkühlungswärmetauscher (6) aufrechterhalten wird.

2. System nach Anspruch 1, **dadurch gekennzeichnet, dass** die zwei 4-Wege-Ventile (61, 62) miteinander synchronisiert sind, so dass die Betätigung beider Ventile (61, 62) simultan ist.

3. System nach Anspruch 2, **dadurch gekennzeichnet, dass** die zwei 4-Wege-Ventile (61, 62) mechanisch synchronisiert sind.

4. System nach Anspruch 2, **dadurch gekennzeichnet, dass** die zwei 4-Wege-Ventile (61, 62) elektronisch synchronisiert sind.

5. System nach Anspruch 1, **dadurch gekennzeichnet, dass** das erste 4-Wege-Ventil (61) in dem Heizkreislauf (60) stromabwärts des Schmierölwärmetauschers (4) und des Fernwärmetauschers (5), jedoch stromaufwärts des Kühlflüssigkeitswärmetauschers (3) und des Ladeluftkühlungswärmetauschers angeordnet ist.

6. System nach Anspruch 1, **dadurch gekennzeichnet, dass** das zweite 4-Wege-Ventil (62) in dem Heizkreislauf (60) stromabwärts des Kühlflüssigkeitswärmetauschers (3) oder des Ladeluftkühlungswärmetauschers (6), jedoch stromaufwärts des Abgaswärmetauschers (2) angeordnet ist.

7. System nach Anspruch 1, **dadurch gekennzeichnet, dass**, wenn die zwei 4-Wege-Ventile (61, 62) in ihre erste Position gedreht werden, der Heizkreislauf (60) so eingestellt ist, dass der Heizkreislauf (60) in der stromabwärtigen Richtung zuerst von dem ersten 4-Wege-Ventil (61) zu dem Ladeluftkühlungswärmetauscher (6), dann zu dem zweiten 4-Wege-Ventil (62) verläuft, dann über den Verbindungskanal (63) zurück zu dem ersten 4-Wege-Ventil (61) und dann zu dem Kühlflüssigkeitswärmetauscher (3) und dann zu dem zweiten 4-Wege-Ventil (62) und dann zu einem Auslasskanal (620) kehrt.

8. System nach Anspruch 1, **dadurch gekennzeichnet, dass**, wenn die zwei 4-Wege-Ventile (61, 62) in ihre zweite Position gedreht werden, der Heizkreislauf (60) so eingestellt ist, dass der Heizkreislauf (60) in der stromabwärtigen Richtung zuerst von dem ersten 4-Wege-Ventil (61) zu dem Kühlflüssigkeitswärmetauscher (3), dann zu dem zweiten 4-Wege-Ventil (62) verläuft, dann über den Verbindungskanal (63) zurück zu dem ersten 4-Wege-Ventil (61) und dann zu dem Ladeluftkühlungswärmetauscher (6) und dann zu dem zweiten 4-Wege-Ventil (62) und dann zu einem Auslasskanal (620) kehrt.

9. System nach Anspruch 7, **dadurch gekennzeichnet, dass** die erste Position der zwei 4-Wege-Ventile, d. h. ein erster Zustand, ausgewählt wird, wenn die Fernwärmeverbrauchernetzwerktemperatur niedrig ist.

10. System nach Anspruch 7, **dadurch gekennzeichnet, dass** die zweite Position, d. h. ein zweiter Zustand, ausgewählt wird, wenn die Fernwärmeverbrauchernetzwerktemperatur hoch ist.

## Revendications

1. Système de récupération de chaleur à partir d'une centrale mixte électrocalogène comprenant un moteur à combustion interne et un circuit de chauffage (60) pour chauffer un fluide (L) à mettre en circulation, ledit système comprenant :
- un échangeur thermique d'échappement (2) est prévu pour récupérer de la chaleur à partir des gaz d'échappement (10) du moteur,
- un échangeur thermique de liquide de refroidissement (3) est prévu pour récupérer de la chaleur à partir d'un circuit de liquide de refroidissement (30) du moteur,
- un échangeur thermique de refroidissement d'air de charge (6) est prévu pour récupérer de la chaleur à partir de l'air de charge,
- un échangeur thermique de chauffage de quartier (5) pour fournir de la chaleur à un réseau consommateur de chauffage de quartier (50),
- l'échangeur thermique de liquide de refroidissement (3) et l'échangeur thermique de refroidissement d'air de charge (6) sont branchés en série, **caractérisé en ce que**
- un échangeur thermique d'huile de lubrification (4) est prévu pour récupérer de la chaleur à partir d'un circuit d'huile de lubrification (40) du moteur,
- deux soupapes à quatre voies (61,62) sont prévues ainsi qu'un canal d'interconnexion (63) entre les soupapes à quatre voies (61,62) pour configurer l'ordre dudit échangeur thermique de liquide de refroidissement (3) et dudit échangeur thermique de refroidissement d'air de charge (6) l'un par rapport à l'autre tout en conservant la direction d'écoulement du fluide de chauffage (L) à travers ledit échangeur thermique de liquide de refroidissement (3) et ledit échangeur thermique de refroidissement d'air de charge (6).

2. Système selon la revendication 1, **caractérisé en ce que** les deux soupapes à quatre voies (61,62) sont synchronisées mutuellement de sorte que l'action des deux soupapes (61,62) soit simultanée.

3. Système selon la revendication 2, **caractérisé en ce que** les deux soupapes à quatre voies (61,62) sont synchronisées mécaniquement.

4. Système selon la revendication 2, **caractérisé en ce que** les deux soupapes à quatre voies (61,62) sont synchronisées électroniquement.

5. Système selon la revendication 1, **caractérisé en ce que** la première soupape à quatre voies (61) est dans le circuit de chauffage (60) à un emplacement en aval de l'échangeur thermique d'huile de lubrification (4) et l'échangeur thermique de chauffage de quartier (5) mais en amont de l'échangeur thermique de liquide de refroidissement (3) et l'échangeur thermique de refroidissement d'air de charge.

6. Système selon la revendication 1, **caractérisé en ce que** la seconde soupape à quatre voies (62) est dans le circuit de chauffage (60) à un emplacement en aval de l'échangeur thermique de liquide de refroidissement (3) ou l'échangeur thermique de refroidissement d'air de charge (6), mais en amont de l'échangeur thermique d'échappement (2).

7. Système selon la revendication 1, **caractérisé en ce que** lorsque les deux soupapes à quatre voies (61,62) sont tournées dans leur première position, le circuit de chauffage (60) est configuré de sorte que le circuit de chauffage (60) fonctionne dans la direction en aval d'abord de la première soupape à quatre voies (61) vers l'échangeur thermique d'air de refroidissement d'air de charge (6), puis vers la seconde soupape à quatre voies (62), en revenant ensuite via le canal d'interconnexion (63) vers la première soupape à quatre voies (61) et ensuite vers l'échangeur thermique de liquide de refroidissement (3) et ensuite vers la seconde soupape à quatre voies (62) et ensuite vers un canal de sortie (620).

8. Système selon la revendication 1, **caractérisé en ce que** lorsque les deux soupapes à quatre voies (61,62) sont tournées dans leur seconde position, le circuit de chauffage (60) est configuré de sorte que le circuit de chauffage (60) fonctionne dans la direction en aval d'abord de la première soupape à quatre voies (61) vers l'échangeur thermique de liquide de refroidissement (3), puis vers la seconde soupape à quatre voies (62), en revenant ensuite via le canal d'interconnexion (63) vers la première soupape à quatre voies (61) et ensuite vers l'échangeur thermique de refroidissement d'air des charge (6) et ensuite vers la seconde soupape à quatre voies (62) et ensuite vers un canal de sortie (620).

9. Système selon la revendication 7, **caractérisé en ce que** la première position des deux soupapes à quatre voies, c'est-à-dire un premier mode est sélectionné lorsque la température du réseau consommateur de chauffage de quartier est basse.

10. Système selon la revendication 7, **caractérisé en ce que** la seconde position des deux soupapes à quatre voies, c'est-à-dire un second mode est sélectionné lorsque la température du réseau consommateur de chauffage de quartier est haute.
